# FASCICULE DE BREVET EUROPEEN

(11) **EP 4 273 492 B1**
(45) Date de publication et mention de la délivrance du brevet: **19.11.2025**
(21) Numéro de dépôt: 23170923.9
(22) Date de dépôt: 01.05.2023
(51) Int. Cl.: F28F 3/04, F28F 3/10, F28D 9/00, F28D 21/00

(54) **DISPOSITIF D ÉCHANGE THERMIQUE COMPRENANT DES PLAQUES EXTERNES PRÉSENTANT AU MOINS UN ÉVIDEMENT, SYSTÈME DE CONDITIONNEMENT D AIR ET VÉHICULE**
WÄRMEAUSTAUSCHVORRICHTUNG MIT AUSSENPLATTEN MIT MINDESTENS EINER AUSSPARUNG, KLIMAANLAGE UND FAHRZEUG
HEAT EXCHANGE DEVICE WITH OUTER PLATES HAVING AT LEAST ONE RECESS, AIR CONDITIONING SYSTEM AND VEHICLE

(30) Priorité: 04.05.2022 FR 2204230
(43) Date de publication de la demande: 08.11.2023
(73) Titulaire: Liebherr-Aerospace Toulouse SAS, 31016 Toulouse Cedex 2 (FR)
(72) Inventeur: BONNIVARD, Florian, 31016 TOULOUSE CEDEX 2 (FR); HANSS, Grégoire, 31016 TOULOUSE CEDEX 2 (FR); SERIEYE, Antony, 31016 TOULOUSE CEDEX 2 (FR); LETELLIER, Vincent, 31016 TOULOUSE CEDEX 2 (FR)
(74) Mandataire: Bringer IP

(56) Documents cités:
- CN-A- 111 623 653
- CN-A- 111 721 150
- DE-A1- 102009 035 676
- KR-A- 20180 023 229
- US-A- 4 442 886
- US-A1- 2014 360 224
- US-B1- 6 267 176

## Description

### Domaine technique de l'invention

L'invention concerne un dispositif d'échange thermique, en particulier un échangeur de chaleur pour un aéronef, comprenant des plaques externes présentant au moins un évidement.

L'invention concerne en particulier un dispositif d'échange thermique à plaques, deux fluides caloporteurs différents circulant entre lesdites plaques de façon à refroidir ou à réchauffer un premier fluide à l'aide d'un deuxième fluide, les deux fluides étant séparés l'un de l'autre par des plaques au contact desquelles s'effectue ledit échange thermique.

Les échangeurs de chaleur à plaques intégrés dans des véhicules atmosphériques sont susceptibles d'être soumis à d'importants gradients de température au cours de leurs cycles de fonctionnement. Cela est particulièrement le cas par exemple d'un échangeur de chaleur destiné à refroidir un air dit « bleed » (en anglais) haute pression, prélevé depuis un moteur propulsif d'un aéronef ou depuis un groupe auxiliaire de puissance (couramment désigné « APU »).

Lorsqu'un échangeur de chaleur commence à fonctionner et à être approvisionné en air « bleed », la température des éléments internes du bloc échangeur (également appelé « faisceau ») augmente plus rapidement que les éléments adjacents du bloc échangeur et de la périphérie de celui-ci. Il en résulte des gradients de température entrainant des contraintes mécaniques et en conséquence d'éventuelles déformations des éléments de l'échangeur (rotation des barres de fermeture du bloc échangeur par exemple). De telles déformations peuvent aller jusqu'à provoquer la rupture de certains éléments se matérialisant par des fissures ou un débrasage de certaines pièces brasées. Ces phénomènes font encourir des risques de fuites de fluide à l'intérieur de l'échangeur, voire vers l'extérieur de celui-ci.

### Arrière-plan technologique

Pour lutter contre les conséquences des gradients de température au sein des dispositifs d'échange thermique de véhicules atmosphériques, et en particulier d'aéronefs, il est connu d'augmenter les épaisseurs des éléments du bloc échangeur les plus susceptibles de casser et de donner lieu à des fuites de fluide. Un dispositif d'échange thermique selon le préambule de la revendication 1 est présenté dans le document US 6 267 176 B1.

Un tel dispositif ne permet pas d'augmenter de façon satisfaisante la résistance thermo-mécanique d'un dispositif d'échange thermique aux gradients de température.

Cette solution contribue à une augmentation sensible de la masse de l'échangeur et n'est pas souhaitable, ni suffisamment efficace en pratique.

L'invention vise donc à proposer un dispositif d'échange thermique permettant de pallier ces inconvénients.

### Objectifs de l'invention

L'invention vise à fournir un dispositif d'échange thermique présentant une très faible sensibilité aux gradients de température.

L'invention vise en particulier à fournir un dispositif d'échange thermique présentant une excellente cohésion structurelle stable dans le temps.

L'invention vise également à fournir un dispositif d'échange thermique présentant une excellente efficacité.

### Exposé de l'invention

Pour ce faire, l'invention concerne un dispositif d'échange thermique comprenant :
- une enceinte de circulation délimitée par au moins deux plaques externes,
- une première entrée d'un premier fluide caloporteur dans l'enceinte de circulation,
- une première sortie dudit premier fluide caloporteur hors de l'enceinte de circulation,
- une deuxième entrée d'un deuxième fluide caloporteur dans l'enceinte de circulation,
- une deuxième sortie dudit deuxième fluide caloporteur hors de l'enceinte de circulation,
- un bloc échangeur à plaques disposé dans l'enceinte de circulation de façon à être en communication de fluide avec les entrées et les sorties pour permettre la circulation du premier fluide caloporteur et du deuxième fluide caloporteur dans et à travers ce bloc échangeur et le transfert de calories entre eux,
- ledit bloc échangeur comprenant une pluralité de plaques internes disposées sensiblement parallèlement les unes par rapport aux autres,
caractérisé en ce que chaque plaque externe présente au moins un évidement.

Ainsi, chaque évidement prévu dans lesdites plaques externes permet de faciliter la conduction de la chaleur depuis l'intérieur du bloc échangeur vers l'extérieur de celui-ci via les zones de ces évidements. Un dispositif d'échange thermique selon l'invention permet donc de limiter les différences de température au sein d'un tel dispositif d'échange thermique ainsi que les contraintes en résultant. Il en résulte une plus grande résistance mécanique aux conditions thermo-mécaniques. Ceci permet ainsi d'éviter la rupture de certaines pièces du faisceau d'un dispositif d'échange thermique.

Dans toute le texte, on entend par « plaque externe » toute plaque présentant au moins une face principale qui n'est pas en contact avec le premier fluide caloporteur et le deuxième fluide caloporteur circulant à l'intérieur du bloc échangeur, dans ladite enceinte de circulation.

En outre, on entend par « évidement » dans chaque plaque externe, tout évidement au moins partiel de l'épaisseur de ladite plaque (par exemple une réduction de l'épaisseur ou un amincissement) ainsi que toute ouverture traversante ou trouée dans l'épaisseur de ladite plaque externe. Selon l'invention, au moins une plaque interne dudit bloc échangeur est accolée à chaque plaque externe de façon à empêcher toute fuite du premier fluide caloporteur et/ou du deuxième fluide caloporteur au travers dudit évidement.

Avantageusement et selon l'invention, chaque plaque externe présente au moins une ouverture traversante (selon son épaisseur).

Avantageusement et selon l'invention, un dispositif d'échange thermique selon l'invention comprend en outre une pluralité d'éléments en saillie configurés pour pouvoir être au contact dudit premier fluide caloporteur et/ou dudit deuxième fluide caloporteur en surface d'un composant dudit dispositif d'échange de chaleur. En particulier, avantageusement et selon l'invention, chaque élément en saillie est formé d'au moins un matériau présentant une conductivité thermique et une capacité thermique volumique au moins égales à la conductivité thermique et à la capacité thermique volumique du matériau formant lesdites plaques internes du bloc échangeur.

Avantageusement et selon l'invention, un dispositif d'échange thermique selon l'invention comprend en outre au moins une bordure de faisceau agencée pour former au moins une arête du bloc échangeur, chaque bordure de faisceau présentant une pluralité d'éléments en saillie, lesdits éléments en saillie étant configurés pour pouvoir être au contact d'au moins un desdits premier fluide caloporteur et deuxième fluide caloporteur (c'est-à-dire au contact dudit premier fluide caloporteur et/ou dudit deuxième fluide caloporteur). Selon un mode de réalisation particulièrement avantageux, lesdits éléments en saillie sont configurés pour pouvoir être au contact dudit deuxième fluide caloporteur, soit avant ladite deuxième entrée de l'enceinte de circulation ou après ladite deuxième sortie de l'enceinte de circulation. Ainsi, chaque élément en saillie prévu sur chaque bordure de faisceau permet d'augmenter localement la température des zones dans lesquelles sont prévus lesdits éléments en saillie.

Avantageusement et selon l'invention, lesdits éléments en saillie peuvent également être prévus sur chaque plaque externe, lesdits éléments en saillie étant configurés pour pouvoir être au contact dudit premier fluide caloporteur et/ou dudit deuxième fluide caloporteur.

Avantageusement et selon l'invention, chaque bordure de faisceau présente au moins un évidement. Ainsi, en alternative ou en combinaison avec la présence d'éléments en saillie, un dispositif comprend au moins une bordure de faisceau agencée pour former au moins une arête du bloc échangeur, chaque bordure de faisceau présentant au moins un évidement.

Avantageusement et selon l'invention, chaque bordure de faisceau est agencée pour former au moins une arête du bloc échangeur, ladite arête s'étendant selon une direction orthogonale auxdites plaques externes.

Le deuxième fluide caloporteur peut correspondre au fluide dont la température est plus importante que la température du premier fluide caloporteur ou inversement. Ainsi, avantageusement et selon l'invention, le deuxième fluide caloporteur correspond au fluide caloporteur dont la température est supérieure à la température du premier fluide caloporteur. En d'autres termes, le premier fluide caloporteur peut être désigné fluide « froid » et le deuxième fluide caloporteur peut être désigné fluide « chaud ».

Avantageusement et selon l'invention, chaque bordure de faisceau s'étend entre deux extrémités longitudinales, lesdits éléments en saillie étant disposés sur des portions d'extrémité de chaque bordure de faisceau. Lesdits éléments en saillie se présentent sous la forme de protubérances s'étendant à partir d'une portion de surface d'une portion d'extrémité de ladite bordure de faisceau et pouvant présenter des formes géométriques variées. Lesdits éléments en saillie peuvent par exemple se présenter sous la forme d'ailettes, de nervures, de languettes, de plots, de picots, de dents ou encore de tétons.

Avantageusement et selon l'invention, un dispositif d'échange thermique selon l'invention comprend en outre au moins une boîte, dite boîte d'alimentation, formant une paroi pleine périphérique entre un orifice et ladite enceinte de circulation, chaque boîte d'alimentation comprenant une surface interne présentant une pluralité d'éléments en saillie, lesdits éléments en saillie étant configurés pour pouvoir être au contact dudit premier fluide caloporteur et/ou dudit deuxième fluide caloporteur.

Avantageusement et selon l'invention, lesdits éléments en saillie se présentent au moins en partie sous la forme de nervures.

Avantageusement et selon l'invention, lesdits éléments en saillie se présentent au moins en partie sous la forme de picots.

Avantageusement et selon l'invention, lesdits éléments en saillie se présentent au moins en partie sous la forme de portions de conduits.

Avantageusement et selon l'invention, lesdits éléments en saillie d'une bordure de faisceau et ladite bordure de faisceau sont formés d'une même pièce. Ils peuvent ainsi également être formés d'un même matériau. Les éléments en saillie peuvent également être fixés par soudure ou brasage par exemple sur ladite bordure de faisceau.

Avantageusement et selon l'invention, une plaque interne, dite plaque intercalaire, est disposée au contact de chaque plaque externe, entre les plaques internes du bloc échangeur et ladite plaque externe. Ainsi le fluide caloporteur circulant dans la première ou la dernière couche du bloc échangeur au contact desdites plaques externes ne s'échappe pas à travers chaque évidement desdites plaques externes.

L'espace entre chacune desdites plaques internes du bloc échangeur, formant des couches internes, peut être laissé libre ou au moins en partie muni de guide-flux. Avantageusement et selon l'invention, un dispositif d'échange thermique selon l'invention comprend en outre au moins un guide-flux disposé entre chaque plaque interne dudit bloc échangeur, chaque guide-flux étant adapté pour former une pluralité de canaux sensiblement parallèles entre eux. Avantageusement et selon l'invention, chaque couche interne est munie d'au moins un guide-flux adapté pour former une pluralité de canaux sensiblement parallèles entre eux.

Avantageusement et selon l'invention, chaque guide-flux est formé d'une pluralité de tronçons successifs présentant chacun un profil crénelé, de façon à former des parois de guidage et des zones de contact surfacique avec les plaques. Il s'agit par exemple de guide-flux dits « offset » (décalage en anglais) dans lesquels deux tronçons successifs sont décalés latéralement, de sorte que les parois de guidage d'un tronçon situé directement adjacent à un autre tronçon sont décalées latéralement (selon une direction parallèle aux plaques externes du bloc échangeur) par rapport aux parois de guidage de ce dernier.

Chaque guide-flux peut être solidarisé avec les plaques internes par exemple par brasage ou par soudure. Chaque guide-flux peut être solidarisé avec les plaques externes par une pluralité de contacts surfaciques. Plus particulièrement, les zones (externes et internes) de contact de chaque guide-flux sont avantageusement brasées aux faces intérieures d'une plaque interne et de la première ou deuxième plaque interne (plaques d'extrémité).

L'utilisation de tels guides-flux entre les plaques internes du bloc échangeur est facultative mais permet d'améliorer l'efficacité des échanges thermiques. Des plaques internes à cannelures peuvent également être utilisées.

Avantageusement et selon l'invention, le dispositif d'échange thermique selon l'invention comprend :
- un premier passage, dit passage du premier fluide caloporteur, permettant la circulation d'un flux du premier fluide caloporteur dans l'enceinte de circulation entre la première entrée et la première sortie, et
- un deuxième passage, dit passage du deuxième fluide caloporteur, permettant la circulation d'un flux du deuxième fluide caloporteur dans l'enceinte de circulation entre la deuxième entrée et la deuxième sortie.

Avantageusement et selon l'invention, ledit bloc échangeur est adapté pour permettre la circulation d'un premier flux de fluide caloporteur dans ladite enceinte de circulation selon une direction, dite direction principale de circulation du premier fluide, entre la première entrée et la première sortie.

Un dispositif d'échange thermique selon l'invention peut être à flux croisés ou encore à contre courants. Avantageusement et selon l'invention, le parcours du premier flux de fluide caloporteur et le parcours du deuxième flux de fluide caloporteur à l'intérieur du bloc échangeur peuvent être chacun sensiblement rectilignes. Avantageusement et selon l'invention, ledit dispositif d'échange thermique est dit à flux croisés. Le dispositif d'échange thermique selon l'invention est adapté pour permettre la circulation du deuxième fluide caloporteur dans le passage du deuxième fluide caloporteur, selon une direction, dite direction de circulation du deuxième fluide, orthogonale à la direction principale de circulation du premier fluide.

Il est bien sûr également possible d'utiliser tout autre type de bloc échangeur à plaques, par exemple dans lequel le flux de l'un et/ou de l'autre du premier ou du deuxième fluide caloporteur suit un parcours en U ou encore en S.

Avantageusement et selon l'invention, le premier fluide caloporteur et le deuxième fluide caloporteur circulent dans les espaces entre les plaques internes fermés latéralement par des barres (ou tiges) de fermeture.

Avantageusement et selon l'invention, l'enceinte de circulation présente une périphérie fermée étanche aux fluides caloporteurs (au moins en fonctionnement et sans tenir compte des entrées et sorties pour le premier fluide caloporteur et pour le deuxième fluide caloporteur).

Avantageusement et selon l'invention, chaque fluide caloporteur peut être sous forme liquide ou gazeuse. En particulier, l'état du premier fluide caloporteur peut être identique ou différent de l'état du deuxième fluide caloporteur. Avantageusement et selon l'invention, le premier fluide caloporteur et le deuxième fluide caloporteur sont sous forme gazeuse.

Avantageusement et selon l'invention, la première entrée présente une bouche d'entrée du premier fluide caloporteur dans l'enceinte de circulation. Avantageusement et selon l'invention, la première sortie présente une bouche de sortie du premier fluide caloporteur hors de l'enceinte de circulation. Dans une variante particulièrement avantageuse et selon l'invention, chaque bouche présente un seul orifice formant entrée ou sortie, une ouverture vers l'enceinte de circulation et/ou vers le bloc échangeur à plaques, et une paroi pleine périphérique entre cet orifice et cette ouverture. Chaque orifice de chaque bouche peut être connecté à un conduit d'arrivée ou d'évacuation du premier fluide caloporteur.

Le dispositif d'échange thermique selon l'invention peut être formé en au moins un matériau choisi parmi les matériaux métalliques, les matériaux composites, les matériaux polymères, les matériaux céramiques, notamment le graphite, le verre... En particulier, dans un mode de réalisation particulièrement avantageux d'un dispositif d'échange thermique selon l'invention, les plaques externes et internes du bloc échangeur sont formées en matériau métallique, notamment en au moins un matériau choisi dans le groupe formé des aciers, du cuivre, de l'aluminium, des alliages métalliques (superalliages notamment) et de leurs mélanges. En particulier, les bordures de faisceau et leurs éléments en saillie sont formés d'au moins un matériau conducteur de la chaleur, c'est-à-dire présentant une conductance thermique suffisante.

L'invention s'étend à un système de conditionnement d'air comprenant au moins un dispositif d'échange thermique selon l'invention. Il peut notamment s'agir d'un échangeur sans contact à flux croisés.

L'invention s'étend à un véhicule, notamment un aéronef, comprenant au moins un système de conditionnement d'air selon l'invention.

L'invention concerne aussi un dispositif d'échange thermique, un système de conditionnement d'air et un véhicule comprenant au moins un tel système de conditionnement d'air caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective d'un dispositif d'échange thermique selon l'invention,
[Fig. 2] est une vue schématique en perspective d'un bloc échangeur d'un dispositif d'échange thermique selon l'invention,
[Fig. 3] est une vue schématique en perspective d'une portion d'un dispositif d'échange thermique selon l'invention,
[Fig. 4] est une vue schématique en perspective d'une portion d'un dispositif d'échange thermique selon l'invention,
[Fig. 5] est une vue schématique en perspective d'une portion d'une boîte d'alimentation d'un dispositif d'échange thermique selon l'invention,
[Fig. 6] est une vue schématique en perspective d'une portion d'une boîte d'alimentation d'un dispositif d'échange thermique selon l'invention,
[Fig. 7] est une vue schématique en perspective d'une bordure de faisceau d'un dispositif d'échange thermique selon un premier mode de réalisation de l'invention,
[Fig. 8] est une vue schématique en perspective d'un détail d'une bordure de faisceau d'un dispositif d'échange thermique selon le premier mode de réalisation de l'invention,
[Fig. 9] est une vue schématique en perspective d'un détail d'une bordure de faisceau d'un dispositif d'échange thermique selon un deuxième mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

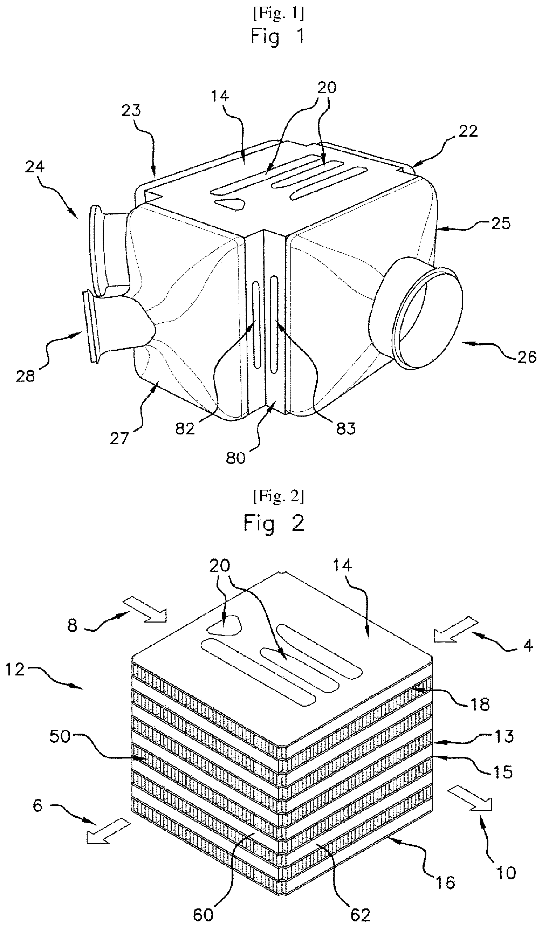

La figure 1 illustre schématiquement un dispositif d'échange thermique selon un premier mode de réalisation de l'invention.

La figure 2 illustre schématiquement un bloc échangeur 12 du dispositif d'échange thermique selon le premier mode de réalisation de l'invention représenté en figure 1.

Un tel dispositif d'échange thermique comprend une enceinte de circulation délimitée par deux plaques externes 14 et 16, le bloc échangeur comprenant des plaques internes 13, 15, 18 disposées sensiblement parallèlement les unes par rapport aux autres entre les plaques externes 14, 16.

Le dispositif d'échange thermique comprend une première entrée 4 et une première sortie 6 d'un premier fluide caloporteur dans l'enceinte de circulation, ainsi qu'une deuxième entrée 8 et une deuxième sortie 10 d'un deuxième fluide caloporteur dans l'enceinte de circulation.

Le bloc échangeur 12 à plaques permet donc la circulation du premier fluide caloporteur et du deuxième fluide caloporteur dans et à travers ce bloc échangeur et le transfert de calories entre ceux-ci.

Le premier fluide caloporteur, dit fluide « froid », circule dans des zones de circulation du premier fluide caloporteur selon une direction principale de circulation du premier fluide entre la première entrée 4 et la première sortie 6. Le deuxième fluide caloporteur, dit fluide « chaud », circule dans des zones de circulation du deuxième fluide caloporteur, distinctes des zones de circulation du premier fluide caloporteur, entre la deuxième entrée 8 et la deuxième sortie 10.

Comme on peut le voir sur les figures 1 et 2, la plaque externe 14 présente au moins un évidement 20. Dans le mode de réalisation illustré, la plaque externe 14 présente quatre évidements 20 dont trois ouvertures de forme oblongue. Chaque évidement 20 est une ouverture traversante localisée dans l'épaisseur de la plaque externe. Les ouvertures (ou lumières) sont prévues de façon à ne pas s'étendre aux bordures et aux coins des plaques externes. Les ouvertures sont de préférence localisées dans une zone sensiblement centrale de chaque plaque. Comme on peut le voir sur la figure 1, une plaque interne du bloc échangeur est accolée à chaque plaque externe 14, 16 (du côté intérieur du bloc échangeur) empêchant toute fuite du premier fluide caloporteur ou du deuxième fluide caloporteur au travers des ouvertures. Chaque plaque interne présente une épaisseur inférieure à l'épaisseur d'une plaque externe. Ainsi, la chaleur depuis l'intérieur du bloc échangeur peut être évacuée au travers de chaque évidement 20 vers l'extérieur du bloc échangeur, chaque ouverture étant ménagée dans une portion centrale de chaque plaque externe, ne comprenant pas les bordures de chaque plaque externe, aucune ouverture n'étant prévue directement à proximité des bordures des plaques externes. Ceci permet de limiter les différences de température au sein d'un tel dispositif d'échange thermique ainsi que les contraintes en résultant.

Le dispositif d'échange thermique comprend en outre quatre bordures de faisceau 80, chaque bordure de faisceau 80 étant agencée pour former une arête du bloc échangeur. Comme on peut le voir sur la figure 1, la bordure de faisceau 80 comprend un évidement 82, 83 sur chaque face principale visible depuis l'extérieur du dispositif d'échange thermique, à la façon des évidements 20 ménagés dans la plaque externe 14 du bloc échangeur 12. Chaque évidement 82, 83 permet de faciliter la conduction de la chaleur depuis l'intérieur du bloc échangeur vers l'extérieur de celui-ci via les zones de ces évidements au travers de l'épaisseur des parois de la bordure de faisceau 80.

Le dispositif d'échange thermique représenté en figure 1 comprend également :
- une première boîte d'alimentation 23 formant une paroi pleine périphérique entre un orifice 24, formant une bouche d'entrée pour le premier fluide caloporteur, et la première entrée 4 du bloc échangeur 12,
- une deuxième boîte d'alimentation 26 formant une paroi pleine périphérique entre un orifice 26, formant une bouche de sortie pour le premier fluide caloporteur, et la première sortie 6 du bloc échangeur 12,
- une troisième boîte d'alimentation 27 formant une paroi pleine périphérique entre un orifice 28, formant une bouche d'entrée pour le deuxième fluide caloporteur, et la deuxième entrée 8 du bloc échangeur 12,
- une quatrième boîte d'alimentation 22 formant une paroi pleine périphérique entre un orifice, formant une bouche de sortie pour le deuxième fluide caloporteur, et la deuxième sortie 10 du bloc échangeur 12.

Chaque orifice de chaque bouche peut en outre être connecté à un conduit d'arrivée ou d'évacuation du premier fluide caloporteur ou du deuxième fluide caloporteur.

Des éléments en saillie formant des ajouts de matière rapportés peuvent être prévus sur diverses surfaces des composants du dispositif d'échange thermique de façon à être en contact avec le premier fluide caloporteur (de préférence à sa sortie, c'est-à-dire après qu'il ait été réchauffé par le deuxième fluide caloporteur) ou du deuxième fluide caloporteur (en entrée et/ou en sortie de l'enceinte de circulation du bloc échangeur 12). De tels éléments en saillie emmagasinent la chaleur du fluide caloporteur au contact duquel ils sont au contact et favorisent l'augmentation de la température des éléments adjacents ou périphériques du bloc échangeur, ce qui contribue également à réduire les gradients de température subis par le bloc échangeur. De tels éléments en saillie peuvent par exemple être prévus sur les bordures de faisceau et/ou l'intérieur des boîtes d'alimentation.

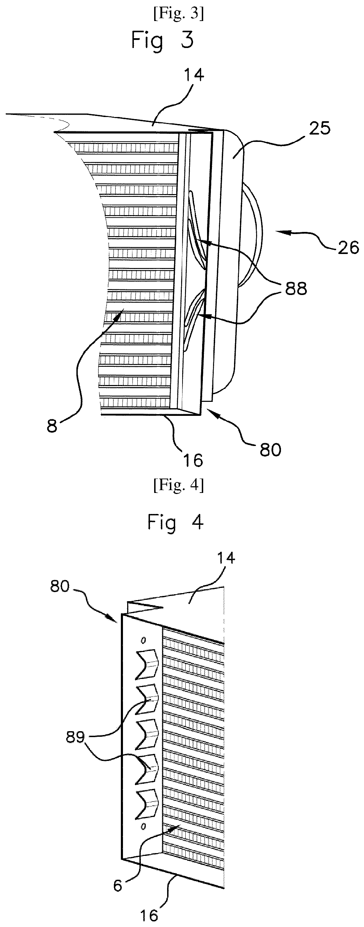

Comme on peut le voir sur la figure 3, la surface de la bordure de faisceau 80 située au contact du deuxième fluide caloporteur (à l'entrée « chaude » 8) est munie d'éléments en saillie 88 formant des nervures obliques.

Comme on peut le voir sur la figure 4, la surface de la bordure de faisceau 80 située au contact du premier fluide caloporteur (à la sortie « froide » 6) est munie d'éléments en saillie 89 (en forme de V à l'envers).

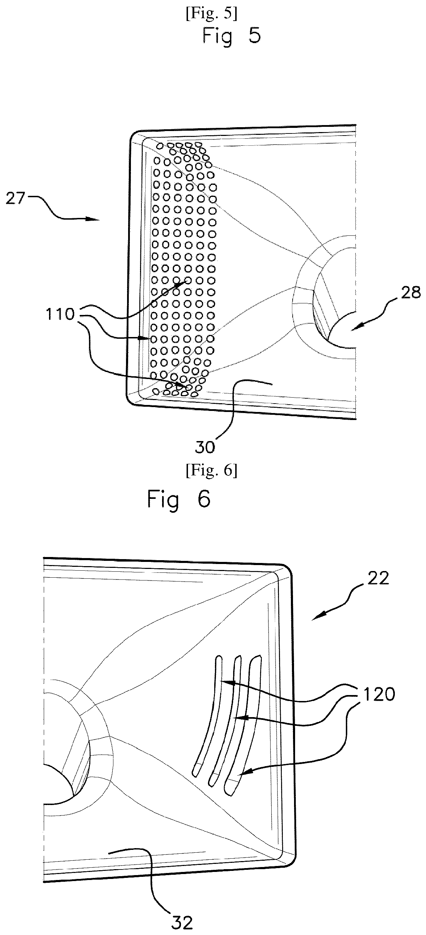

La figure 5 représente la boîte d'alimentation 27 du dispositif d'échange thermique dont une portion de la surface interne 30 est munie de picots 110, se présentant ici sous la forme de six rangées de picots 110 comprenant chacune entre 20 et 25 picots d'un bord à l'autre de la boîte d'alimentation 27.

La figure 6 représente la boîte d'alimentation 22 du dispositif d'échange thermique dont une portion de la surface interne 32 est munie de trois nervures 120 sensiblement parallèles entre elles.

Les éléments en saillie 88, 89 au contact du premier fluide caloporteur (à sa sortie 6) et du deuxième fluide caloporteur (fluide « chaud ») emmagasinent la chaleur de ce fluide et ainsi favorisent et accélèrent l'augmentation de la température des éléments adjacents ou périphériques du bloc échangeur.

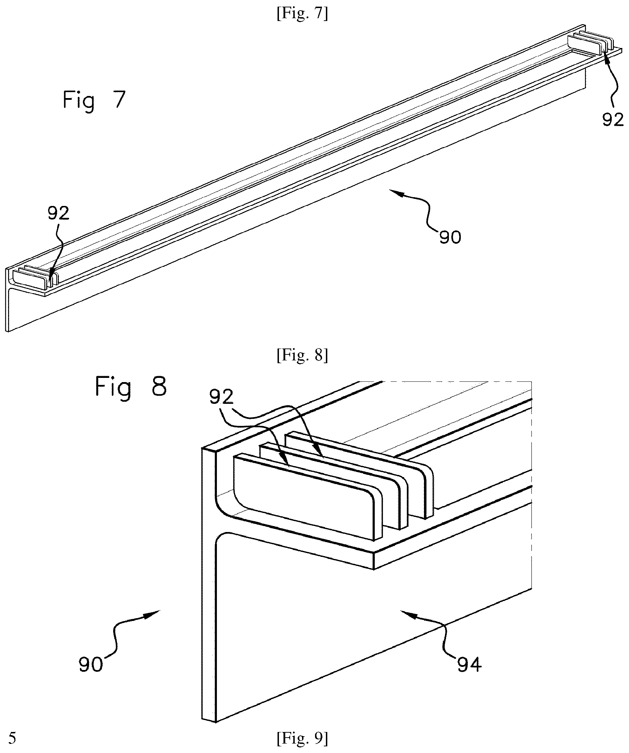

Les figures 7 à 9 représentent deux autres modes de réalisation de bordures de faisceau 90, 100. Chaque bordure de faisceau représentée aux figures 7 à 9, présente des éléments en saillie 92, 102 configurés pour pouvoir être au contact du premier ou du deuxième fluide caloporteur. Ceci permet que les éléments en saillie 92, 102 au contact du deuxième fluide caloporteur (fluide « chaud ») emmagasinent la chaleur de ce fluide et ainsi favorisent et accélèrent l'augmentation de la température des éléments adjacents ou périphériques du bloc échangeur. Les éléments en saillie 92, 102 permettent ainsi de récupérer la chaleur par convection et de la transporter par conduction dans les pièces adjacentes dont la température est inférieure à la température desdits éléments en saillie.

Les éléments en saillie 92, 102 sont disposés sur des portions d'extrémité de chaque bordure de faisceau 90, 100, une zone plane, dénuée de tels éléments en saillie, étant prévue entre ces deux portions d'extrémités.

Dans les modes de réalisation représentés aux figures 7 à 9, chaque bordure de faisceau 90, 100 présente une forme de profilé rectiligne présentant une section droite transversale en T (non symétrique ici). Les éléments en saillie 92, 102 peuvent être disposés sur une même surface de chaque bordure de faisceau 90, 100 en T. Dans les modes de réalisation représentés aux figures 7 à 9, chaque bordure de faisceau 90, 100 présente une paroi 94, 104, sensiblement orthogonale à la surface munies des éléments en saillie 92, 102, libre dont une face peut être fixée à une arête du bloc échangeur, la face opposée de la paroi 94, 104, pouvant être utilisée pour y fixer une boîte d'alimentation et/ou de sortie du deuxième fluide caloporteur.

Les éléments en saillie peuvent présenter diverses formes, par exemple du type ailettes, nervures, languettes, plots, picots, dents, ou encore pointes.

Dans une première variante de réalisation d'un dispositif d'échange thermique selon l'invention représentée aux figures 7 et 8, les éléments en saillie se présentent sous la forme de nervures 92. Trois nervures 92 sont par exemple prévues ici à chaque extrémité de chaque bordure de faisceau 90 dans la variante de réalisation représentée aux figures 7 et 8.

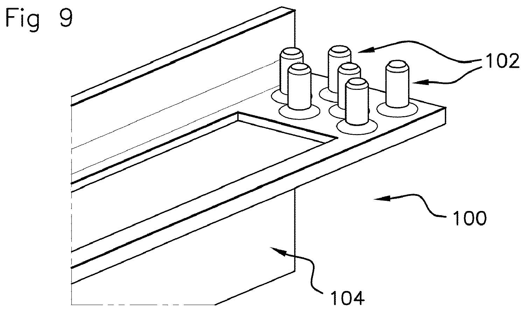

Dans une deuxième variante de réalisation d'un dispositif d'échange thermique selon l'invention représentée à la figure 9, les éléments en saillie se présentent sous la forme de picots 102. Six picots 102 sont par exemple prévus ici à chaque extrémité de chaque bordure de faisceau 100 dans la variante de réalisation représentée à la figure 9.

Dans une troisième variante de réalisation d'un dispositif d'échange thermique selon l'invention (non représentée), les éléments en saillie se présentent sous la forme de portions de conduits ou de guide-flux.

Les éléments en saillie 92, 102 d'une bordure de faisceau 90, 100 peuvent être moulés simultanément à la bordure de faisceau lors de sa fabrication, ou encore être soudés ou brasés en surface de celle-ci de façon à ne former qu'une même pièce (en un matériau distinct ou non).

D'autre part, dans le mode de réalisation illustré, chaque couche interne du bloc échangeur 12 est munie d'un guide-flux 50 formant une pluralité de canaux sensiblement parallèles entre eux. Les espaces entre les plaques internes 13, 15, 18 sont fermés latéralement par des barres 60, 62 de fermeture. Les plaques internes 13, 15, 18 sont disposées parallèlement les unes aux autres et parallèlement aux plaques externes 2.

Dans les variantes représentées aux figures 1 à 9, le parcours du premier et du deuxième flux de fluide caloporteur à l'intérieur du bloc échangeur est sensiblement rectiligne (sans considérer les sinuosités éventuelles en présence de certains guides-flux). Il est bien sûr également possible d'utiliser tout autre type de bloc échangeur à plaques, par exemple dans lequel le flux de l'un et/ou de l'autre du premier ou du deuxième fluide caloporteur suit un parcours en U ou encore en S.

Dans les modes de réalisation représentés, des guides-flux 50 s'étendent dans l'intégrité des couches internes du bloc échangeur 12.

Un dispositif d'échange thermique selon l'invention permet donc effectivement de limiter efficacement les gradients de température susceptibles d'endommager le bloc échangeur.

L'invention ne se limite pas aux modes de réalisation décrits. En particulier, rien n'empêche de prévoir des éléments en saillie de formes différentes sur chaque bordure de faisceau.

## Revendications

1. Dispositif d'échange thermique comprenant :
- une enceinte de circulation délimitée par au moins deux plaques externes (14, 16),
- une première entrée (4) d'un premier fluide caloporteur dans l'enceinte de circulation,
- une première sortie (6) dudit premier fluide caloporteur hors de l'enceinte de circulation,
- une deuxième entrée (8) d'un deuxième fluide caloporteur dans l'enceinte de circulation,
- une deuxième sortie (10) dudit deuxième fluide caloporteur hors de l'enceinte de circulation,
- un bloc échangeur (12) à plaques disposé dans l'enceinte de circulation de façon à être en communication de fluide avec les entrées (4, 8) et les sorties (6, 10) pour permettre la circulation du premier fluide caloporteur et du deuxième fluide caloporteur dans et à travers ce bloc échangeur et le transfert de calories entre eux,
- ledit bloc échangeur comprenant une pluralité de plaques internes (13, 15, 18) disposées sensiblement parallèlement les unes par rapport aux autres,
**caractérisé en ce que** chaque plaque externe (14, 16) présente au moins un évidement (20) et **en ce qu'**au moins une plaque interne dudit bloc échangeur est accolée à chaque plaque externe de façon à empêcher toute fuite du premier fluide caloporteur et/ou du deuxième fluide caloporteur au travers dudit évidement.

2. Dispositif selon la revendication 1, **caractérisé en ce qu'**il comprend au moins une bordure de faisceau (80, 90, 100) agencée pour former au moins une arête du bloc échangeur, chaque bordure de faisceau (80, 90, 100) présentant une pluralité d'éléments en saillie (88, 89, 92, 102) configurés pour pouvoir être au contact d'au moins un desdits premier fluide caloporteur et deuxième fluide caloporteur.

3. Dispositif selon l'une des revendications 1 ou 2, **caractérisé en ce que** le deuxième fluide caloporteur correspond au fluide caloporteur dont la température est supérieure à la température dudit premier fluide caloporteur.

4. Dispositif selon l'une des revendications 1 à 3, **caractérisé en ce qu'**il comprend en outre au moins une boîte, dite boîte d'alimentation (22, 27), formant une paroi pleine périphérique entre un orifice (28) et ladite enceinte de circulation, chaque boîte d'alimentation comprenant une surface interne (30, 32) présentant une pluralité d'éléments en saillie (110, 120), lesdits éléments en saillie étant configurés pour pouvoir être au contact dudit premier fluide caloporteur et/ou dudit deuxième fluide caloporteur.

5. Dispositif selon l'une des revendications 2 ou 4, **caractérisé en ce que** lesdits éléments en saillie se présentent au moins en partie sous la forme de nervures (92, 120).

6. Dispositif selon l'une des revendications 2 ou 4, **caractérisé en ce que** lesdits éléments en saillie se présentent au moins en partie sous la forme de picots (102, 110).

7. Dispositif selon la revendication 2 et l'une des revendications 1 à 6, **caractérisé en ce que** lesdits éléments en saillie (88, 92, 102) d'une bordure de faisceau et ladite bordure de faisceau (80, 90, 100) sont formés d'une même pièce.

8. Dispositif selon l'une des revendications 1 à 7, **caractérisé en ce qu'**il comprend au moins une bordure de faisceau (80) agencée pour former au moins une arête du bloc échangeur, chaque bordure de faisceau (80) présentant au moins un évidement (82, 83).

9. Dispositif selon l'une des revendications 1 à 8, **caractérisé en ce qu'**il comprend au moins un guide-flux (50) disposé entre chaque plaque interne (13, 15) dudit bloc échangeur (12), chaque guide-flux (50) étant adapté pour former une pluralité de canaux sensiblement parallèles entre eux.

10. Système de conditionnement d'air **caractérisé en ce qu'**il comprend au moins un dispositif d'échange thermique selon l'une des revendications 1 à 9.

11. Véhicule -notamment aéronef- **caractérisé en ce qu'**il comprend au moins un système de conditionnement d'air selon la revendication 10.

## Patentansprüche

1. Wärmetauschvorrichtung, welche umfasst:
- eine Strömungskammer, die durch mindestens zwei Außenplatten (14, 16) begrenzt ist,
- einen ersten Einlass (4) für ein erstes Wärmeübertragungsfluid in die Strömungskammer,
- einen ersten Auslass (6) für das erste Wärmeübertragungsfluid aus der Strömungskammer,
- einen zweiten Einlass (8) für ein zweites Wärmeübertragungsfluid in die Strömungskammer,
- einen zweiten Auslass (10) für das zweite Wärmeübertragungsfluid aus der Strömungskammer,
- einen Tauscherblock (12) mit Platten, die in der Strömungskammer so angeordnet sind, dass sie in Fluidverbindung mit den Einlässen (4, 8) und den Auslässen (6, 10) stehen, um den Fluss des ersten Wärmeübertragungsfluids und des zweiten Wärmeübertragungsfluids in und durch diesen Tauscherblock und die Wärmeübertragung zwischen diesen zu ermöglichen,
- worin der Tauscherblock mehrere Innenplatten (13, 15, 18) umfasst, die im Wesentlichen parallel zueinander angeordnet sind,
**dadurch gekennzeichnet, dass** jede Außenplatte (14, 16) mindestens eine Aussparung (20) aufweist und dass mindestens eine Innenplatte des Wärmetauscherblocks an jeder Außenplatte befestigt ist, um ein Austreten des ersten Wärmeübertragungsfluids und/oder des zweiten Wärmeübertragungsfluids durch die Aussparung zu verhindern.

2. Vorrichtung nach Anspruch 1, **dadurch gekennzeichnet, dass** diese mindestens ein Kernband (80, 90, 100) umfasst, das so angeordnet ist, dass es mindestens eine Kante des Tauscherblocks bildet, worin jedes Kernband (80, 90, 100) mehrere vorstehende Elementen (88, 89, 92, 102) aufweist, die ausgestaltet sind, mit mindestens einem von dem ersten Wärmeübertragungsfluid und dem zweiten Wärmeübertragungsfluid in Kontakt zu stehen.

3. Vorrichtung nach einem der Ansprüche 1 oder 2, **dadurch gekennzeichnet, dass** das zweite Wärmeübertragungsfluid dem Wärmeübertragungsfluid entspricht, das eine Temperatur aufweist, die höher ist als die Temperatur des ersten Wärmeübertragungsfluids.

4. Vorrichtung nach einem der Ansprüche 1 bis 3, **dadurch gekennzeichnet, dass** diese ferner mindestens einen als Vorratsbehälter (22, 27) bezeichneten Behälter umfasst, der eine feste Umfangswand zwischen einer Öffnung (28) und der Strömungskammer bildet, worin jeder Vorratsbehälter eine Innenfläche (30, 32) mit mehreren vorstehenden Elementen (110, 112) aufweist, worin die vorstehenden Elemente ausgestaltet sind, mit dem ersten Wärmeübertragungsfluid und/oder dem zweiten Wärmeübertragungsfluid in Kontakt zu stehen.

5. Vorrichtung nach einem der Ansprüche 2 oder 4, **dadurch gekennzeichnet, dass** die vorstehenden Elemente zumindest teilweise die Form von Rippen (92, 120) haben.

6. Vorrichtung nach einem der Ansprüche 2 oder 4, **dadurch gekennzeichnet, dass** die vorstehenden Elemente zumindest teilweise die Form von Noppen (102, 110) haben.

7. Vorrichtung nach Anspruch 2 und einem der Ansprüche 1 bis 6, **dadurch gekennzeichnet, dass** die vorstehenden Elemente (88, 92, 102) eines Kernbandes und das Kernband (80, 90, 100) einstückig ausgebildet sind.

8. Vorrichtung nach einem der Ansprüche 1 bis 7, **dadurch gekennzeichnet, dass** diese mindestens ein Kernband (80) umfasst, das so angeordnet ist, dass es mindestens eine Kante des Tauscherblocks bildet, worin jedes Kernband (80) mindestens eine Vertiefung (82, 83) aufweist.

9. Vorrichtung nach einem der Ansprüche 1 bis 8, **dadurch gekennzeichnet, dass** diese mindestens eine Strömungsführung (50) umfasst, die zwischen jeder Innenplatte (13, 15) des Tauscherblocks (12) angeordnet ist, worin jede Strömungsführung (50) angepasst ist, mehrere Kanäle zu bilden, die im Wesentlichen parallel zueinander verlaufen.

10. Klimaanlage, **dadurch gekennzeichnet, dass** diese mindestens eine Wärmetauschvorrichtung gemäß einem der Ansprüche 1 bis 9 umfasst.

11. Fahrzeug - insbesondere ein Flugzeug - **dadurch gekennzeichnet, dass** dieses mindestens eine Klimaanlage gemäß Anspruch 10 umfasst.

## Claims

1. Heat-exchange device comprising:
- a flow enclosure defined by at least two external plates (14, 16),
- a first inlet (4) for a first heat-transfer fluid into the flow enclosure,
- a first outlet (6) for said first heat-transfer fluid out of the flow enclosure,
- a second inlet (8) for a second heat-transfer fluid into the flow enclosure,
- a second outlet (10) for said second heat-transfer fluid out of the flow enclosure,
- an exchanger block (12) with plates disposed in the flow enclosure so as to be in fluid communication with the inlets (4, 8) and the outlets (6, 10) in order to permit the flow of the first heat-transfer fluid and of the second heat-transfer fluid into and through this exchanger block and the transfer of calories therebetween,
- said exchanger block comprising a plurality of internal plates (13, 15, 18) disposed substantially parallel with respect to each other,
**characterized in that** each external plate (14, 16) has at least one hollow (20) and **in that** at least one internal plate of said heat exchanger block is attached to each external plate so as to prevent any leakage of the first heat-transfer fluid and/or the second heat-transfer fluid through said hollow.

2. Device as claimed in claim 1, **characterized in that** it comprises at least one core band (80, 90, 100) arranged to form at least one edge of the exchanger block, each core band (80, 90, 100) having a plurality of protruding elements (88, 89, 92, 102) configured to be able to be in contact with at least one of said first heat-transfer fluid and second heat-transfer fluid.

3. Device as claimed in any one of claims 1 or 2, **characterized in that** the second heat-transfer fluid corresponds to the heat-transfer fluid which is at a temperature greater than the temperature of said first heat-transfer fluid.

4. Device as claimed in any one of claims 1 to 3, **characterized in that** it further comprises at least one box, referred to as supply box (22, 27), forming a solid peripheral wall between an orifice (28) and said flow enclosure, each supply box comprising an internal surface (30, 32) having a plurality of protruding elements (110, 112), said protruding elements being configured to be able to be in contact with said first heat-transfer fluid and/or said second heat-transfer fluid.

5. Device as claimed in any one of claims 2 or 4, **characterized in that** said protruding elements are at least partially in the form of ribs (92, 120).

6. Device as claimed in any one of claims 2 or 4, **characterized in that** said protruding elements are at least partially in the form of studs (102, 110).

7. Device as claimed in claim 2 and any one of claims 1 to 6, **characterized in that** said protruding elements (88, 92, 102) of a core band and said core band (80, 90, 100) are formed as one piece.

8. Device as claimed in any one of claims 1 to 7, **characterized in that** it comprises at least one core band (80) arranged to form at least one edge of the exchanger block, each core band (80) having at least one hollow (82, 83).

9. Device as claimed in any one of claims 1 to 8, **characterized in that** it comprises at least one flow guide (50) disposed between each internal plate (13, 15) of said exchanger block (12), each flow guide (50) being adapted to form a plurality of channels which are substantially parallel to each other.

10. Air-conditioning system **characterized in that** it comprises at least one heat-exchange device as claimed in any one of claims 1 to 9.

11. Vehicle - in particular an aircraft - **characterized in that** it comprises at least one air-conditioning system as claimed in claim 10.
